# EUROPEAN PATENT SPECIFICATION

(11) **EP 2 349 662 B1**
(45) Date of publication and mention of the grant of the patent: **01.07.2020**
(21) Application number: 09818853.5
(22) Date of filing: 09.10.2009
(51) Int. Cl.: C08L 97/02, C09D 191/00, C08G 63/46, B27K 3/15, C09D 167/08, B27K 3/08, C08L 91/00, C08L 93/04

(54) **IMPREGNATION WITH AN EMULSION**
IMPRÄGNIERUNG MIT EINER EMULSION
IMPRÉGNATION PAR UNE ÉMULSION

(30) Priority: 09.10.2008 FI 20085952
(43) Date of publication of application: 03.08.2011
(73) Proprietor: TIKKURILA OYJ, 01300 Vantaa (FI)
(72) Inventor: KEINÄNEN, Kari, 06100 Porvoo (FI); ERONEN, Riitta, 04400 Järvenpää (FI); SOLJAMO, Kari, 00840 Helsinki (FI); KOSKI, Anna, 15610 Lahti (FI); LEHTO, Jaakko, 02200 Espoo (FI)
(74) Representative: Berggren Oy, Helsinki & Oulu
(86) International application number: PCT/FI2009/050809
(87) International publication number: WO 2010/040903

(56) References cited:
- WO-A1-94/18260
- WO-A1-2007/101910
- DE-A1- 19 841 271
- US-A- 3 100 157
- US-A- 3 617 314
- US-A- 3 617 314
- US-A- 5 032 179
- US-A1- 2005 265 893
- DATABASE WPI Week 199345 Thomson Scientific, London, GB; AN 1993-356770 XP002719546, -& JP 5 261706 A (YOSHITOMI PHARM IND KK) 12 October 1993 (1993-10-12)
- DATABASE WPI Week 199345, Derwent Publications Ltd., London, GB; AN 1993-356770, XP003026356 & JP 5 261 706 A (YOSHITOMI PHARM IND KK) 12 October 1993

## Description

### Field of the invention

The invention is concerned with wood treatment and relates to impregnation of wood by absorbing emulsion into it by means of pressure difference. With the aid of the invention especially the moisture deformation of the wood can be diminished.

### Technical background

It is well known that the humidity of wood significantly affects its dimensions. In order to achieve dimensional stability the wood has been impregnated with for example polyglycols and water soluble phenol, urea, acryl or alkyd polymers. One such method is known for example from publication US 4 276 329.

From publication US 2005/0136278 on the other hand, a method is known, where pine sapwood is impregnated with a mixture containing natural rosin or a derivative thereof and water. Thus the physical properties and appearance of the sapwood can be made to resemble the heartwood more.

From publication US 3 100 157 an aqueous solution is known, which has a dissolved composition, which consists essentially of fatty acid ester, polyalcohol and polyoxy ethylene polyol. The polyoxy ethylene polyol is here a raw material estered onto an alkyd chain, which makes the alkyd chain hydrophilic. Glycol ethers are additionally used as coupling solvent, which increase the solubility of the alkyd in water. The solution is very hydrophilic. The solution is used as the liquid phase of dispersion paints. The paint provides a similar film onto the surface as an oil paint.

Publication US 3 617 314 discloses a wood treatment composition which imparts water repellency to kiln-dried lumber. The composition comprises pentaerythritol ester of rosin acids and rosin and fatty acid mixtures, polychlorophenol, wax, lower-titer C10-C20 fatty acids, C1-C4 alkyl alkanol amine, water immiscible solvent and water.

Publication JP 05261706 relates to a composition for preservation treatment of wood. The composition is prepared by compounding one or more resins selected from a group consisting of an acrylic resin, glycerine fatty acid ester, an alkyd resin and a rosin derivative with one or more wood preservatives selected from a group consisting of IPBC, EBIP and IF-1000 and an ant-proof agent.

Publication WO 9418260 discloses water-soluble, air-drying resins, a process for making the same and the use of said resins as dispersing agents and as agents for use in wood preservation applications.

### Summary of the invention

Now a method according to claim 1 has been invented, in which an emulsion is absorbed into wood. The other claims present some advantageous embodiments of the invention.

According to the invention, an emulsion is absorbed into the wood by means of pressure difference, which emulsion contains a reaction product of a fatty acid obtained from a natural oil with a polyalcohol, an emulgator and water. Preferably an emulsion is used, which contains a reaction product of a fatty acid obtained from a natural oil, a natural rosin with a polyalcohol, an emulgator and water. The emulsion may contain additives. Such additives are pH regulators, emulsion preservatives, physically acting wood preservatives, siccatives and colouring agents. The emulsion essentially consists only of the reaction product in question, one or several emulgators, water and possibly in addition of one or several of the above-listed additives. The emulsion does thus not contain, in addition to these substances, other active substances, which affect the properties of the treated wood, or other active substances, which affect the properties of the emulsion.

It has surprisingly been found that by impregnating wood with this emulsion the moisture deformation of the wood is especially diminished. In addition a good biological durability is obtained even without a biocidal preservative. Thus the wood preserving effect of the emulsion is solely physical.

### Detailed description of the invention

The reaction product used in the emulsion is obtained by reacting a fatty acid obtained from a natural oil and a polyalcohol. A condensation reaction occurs, where ester is formed from the acid. Natural oil always contains several fatty acids, and thus a mixture of fatty acids is in practice also reacted here.

The oil, from which the fatty acid is obtained, can be of a vegetative or animal source. For example the following can be used: tall oil, flax oil, soy oil, cotton seed oil, safflower oil, cumin oil, rapeseed oil, coconut oil, castor oil, wood oil, vernonia oil, sunflower oil or fish oil or mixtures thereof.

Air drying fatty acids, such as tall oil fatty acid, flax oil, soy oil or their mixtures are especially usable.

For example the following alcohols can be used: pentaerythritol, glycerol, trimethylol propane, di-trimethylol propane, di-pentaerythritol, ethylene glycol, 1,3-propanediol, 1,4-butanediol, 1,6-hexanediol, diethylene glycol, triethylene glycol, dipropylene glycol, 1,2-propanediol, 1,2-butanediol, 1,3-butanediol, neopentyl glycol, polyethylene glycol, polypropylene glycol, ethoxylated bisfenol-A which has 2-12 ethylene oxide units or propoxylated bisfenol-A which has 2-12 propylene oxide units, or mixtures thereof. Pentaerythritol, glycerol and trimethylol propane are especially suitable.

The manufacture of the reaction product of a fatty acid obtained from a natural oil and a polyalcohol usually happens by adding all the initial substances into a reaction vessel, which has a mixer, and the content is inerted using nitrogen gas. The alcohol and the fatty acid mixture, for example pentaerythritol and tall oil fatty acid, are added and heating is started. The mixture is heated to about 80 °C and mixing is started. The raising of the temperature is continued, until the desired cooking temperature is reached, which is typically 250-280 °C. The progress of the cooking is monitored from change in the acid value, and it is at the end stage typically 5-20. The progress of the cooking can be speeded up at the end stage by using underpressure, which speeds up the exit of the water from the reaction mixture. Also suitable catalysts, for example acids, such as p-toluene sulphonic acid and phosphoric acid, or organic tin compounds, speed up the progress of the reaction.

Generally in the manufacture of the reaction product of the fatty acid mixture and the polyalcohol, a polyalcohol excess is used, calculated based on the equivalence ratio of the functional groups which react in the esterifying reaction, in order to minimize the amount of free acid in the final product. Typically the excess is 1-20 %.

When manufacturing the reaction product, additionally a natural rosin can be used. The rosin acids of the rosin also react with the alcohol, forming esters. Thus for example the drying ability can be improved and further the hydrophobia of the impregnated wood can be increased. Coniferous rosins can advantageously be used as the rosin component, examples of which are gum rosin, wood rosin, tall oil rosin or their mixtures. Derivatives of natural rosins can further be used, the most common of which are hydrated rosins, dehydrated rosins, dimerized rosins and polymerized rosins.

In the manufacture of the reaction product of the fatty acid obtained from a natural oil, the natural rosin and the polyalcohol, the proportion of the fatty acids of the amount of acid components typically varies in the range 30-99 wt-% and the proportion of the natural rosin in the range 1-70 wt-%.

The median d50 of the particle size distribution of the reaction product in the emulsion can be for example under 5 µm, preferably under 950 nm, more preferably under 600 nm, and most preferably under 400 nm. A small particle size facilitates the penetration of the substance into the pores of the wood. The particle size distribution is determined for example with light dispersion technique, with a Malven Mastersizer 2000 device.

The emulgator is non-ionic or anionic, especially non-ionic. A non-ionic emulgator can for example be one which has ether linkages, with the amount of which the solubility of the substance can be influenced. Such is for example the reaction product of a fatty acid or alcohol and ethylene oxide (EO) or propylene oxide (PEO), where the amount of the recurring EO or PEO unit is 1-40, or the EO or PEO product of C8-C18-oxoalcohol or acid. The solubility of the emulgator in water is described by the HLB value, and emulgators, which have an HLB value of 10-18, form a transparent or clear aqueous solution. Two non-ionic emulgators can also be used, the HLB value of one of which is higher and the other slightly lower. An anionic emulgator can further be used as needed in order to improve stability. Emulgators are described for example in Jan W. Gooch, "Emulsification and Polymerization of Alkyd Resins", Kluver Academic Publications, 2001 p. 51).

The concentration of emulgators in the emulsion is 1-12 wt-%, preferably 3-10 wt-%.

When desired, an acid group neutralizing substance, such as ammonium, can be added.

The emulsion does not contain any biocidal wood preservative. By biocidal wood preservative is meant a substance, which is meant to chemically or biologically destroy, control or make harmless the organisms that are harmful to the wood, to prevent their effects or to limit their occurrence in another way.

Preferably an emulsion concentrate is first manufactured, which can be diluted while preserving the emulsion texture. The reaction product content of the concentrate can be for example 40-80 wt-%. The concentrate is then diluted at the use site into its use concentration. Thus the transport and storage costs are reduced. The reaction product content in the impregnation emulsion diluted to its use concentration is 5-50 wt-%, preferably 6-25 wt-%. With such a relatively diluted emulsion the absorption of a needless excess into the wood can be prevented. The use of the dilutable emulsion makes possible regulation of the dry matter content, with which the process can be optimized (i.e. the exact amount of dry matter/m³ needed can be obtained in the wood). This has a great significance to the quality and costs of the final product.

Emulsions that are diluted with water are also easy to wash away from the apparatuses after use and recycle back into the process, when the emulsion texture is preserved and binder is not separated onto surfaces. It should be possible to dilute the emulsion to less than 5 %, most preferably less than 1 %.

The emulsion must also withstand pressures occurring in the impregnation process, pressure cycles and possible temperature rises happening in the process.

The emulsion can generally be manufacture so that a water soluble emulgator is added to water and the thus obtained mixture is mixed with a reaction product, until a desirable emulsion is obtained. Methods and apparatuses suitable for the manufacturing are described for example in the publications WO 2004/082817 and EP 1 707 256.

The emulsion used in the invention can be manufactured with a continuously working apparatus, whereby water and therein possibly dissolved emulgators are manufactured in their own container, wherefrom the mixture is pumped into the lower part of the mixing cylinder with its own feeding line. Likewise the reaction product in question and therein possibly added acid group neutralizing substances and possible emulgators are mixed in their own container, wherefrom they are pumped with their own feeding line into the lower part of the mixing cylinder. The feeding streams are fed into the mixing cylinder at a desired ratio, which in oil-water for emulsions typically is 15:1-5:1 (reaction product - water). In the mixing cylinder there is a mixer, with which the feeding streams are mixed, typically with a speed of 1000-4000 rpm, and the emulsion is formed. The emulsion exits the mixing cylinder via the line in its top part typically to another mixing cylinder (to the lower part), where water and possible additives can be added to the emulsion, the mixing speed being for example 300-2000 rpm, whereby the emulsion is diluted to a desirable dry matter content. From this cylinder the diluted emulsion is typically led to a collecting vessel.

As additives in the emulsions can be used for example siccatives (which are cobalt or zirconium salts, for example carboxylates such as octoates) and preservatives. The siccative promotes the drying of the emulsion. A suitable amount is for example 1-5 % of the weight of the emulsion. With a preservative the emulsion can be protected especially against bacteria. The preservative is 1,2-benz-isothiazol-3(2H)-one, N-butyl benzisothiazolone, 2-octyl-2H-isothiazol-3-one, 2,2-ditiobis(N-methyl)benzamide, methyl isothiazolinone, zinc pyritione or iodine propynyl butyl carbamate. A suitable amount is for example 100-500 ppm, most preferably 150-200 ppm of the weight of the emulsion. The preservative of the emulsion does not have any substantial chemical or biological wood preserving effect.

As additives can also be used physically acting wood preservatives, which are polyvalent metal salts (e.g. suitable aluminium salts or iron salts, such as hydrous ferrous sulphate or hydrous aluminium sulphate). A suitable amount is for example 0.5-5 % of the weight of the emulsion.

As colouring agents can be used colouring agents usable in paints.

The emulsion can also be manufactured as a batch process, whereby water and possible water soluble emulgators are mixed together in a separate vessel. It is mixed until the mixture is clear. The binder and therein possibly added acid group neutralizing substances and possible oil-soluble emulgators are mixed in their own vessel. A metallic mixing vessel and a therein fitting dispersion blade (the ratio of the diameter of the blade to the diameter of the vessel is e.g. ¹/₃:1-²/₃:1) is put in a dissolver (e.g. Dispermat). The mixing speed of the dissolver is set at for example 300-500 rpm and both mixtures are added as an even stream into the mixing vessel. After the adding (5-15 min) the revolutions are increased to for example 1300-2000 rpm and it is mixed for example 10-20 minutes. Thereafter the mixing speed is lowered to for example 300-500 rpm and a desired amount of water is added in order to regulate the dry matter content.

When the emulsion is made so that separate water and binder streams are combined, high dry matter emulsions can be manufactured. The advantage of these is that the emulsion does not need to be strongly alkaline, in order to be stable, but it can be acidic, neutral or alkaline as needed.

The emulsion is absorbed into the wood with pressure difference. Thus especially pressure impregnation methods, vacuum impregnation methods or their combinations can be used. Among such methods can be mentioned for example full cell methods, such as the Bethell process and the modified Bethell process, and empty cell methods, such as the Rüping process and the Lowry process.

One advantage of the emulsion is further its stability within a wide pH range (pH about 2-11). Thus the emulsion can be used several times despite the fact that acid extractives dissolve into it from the wood.

By treating the wood according to the invention with the emulsion a very good dimensional stability and water repulsion is achieved. In addition a good biological durability is obtained even without a wood preservative. Since no biocides are used in the emulsion, the wood can be treated as harmlessly as possible. Thus the wood can be treated and worked safely without particular protective procedures. The wood can also be recycled, decomposed or burned or otherwise destroyed without special devices. When no organic solvents are needed in the emulsion, its manufacturing and treatment is easy in view of occupational hygiene. In addition to the dimensional stability and the water repulsion certain other wood use properties are also improved. The wood is more stable and tough, for example cracking is decreased whereby among others the nailing properties of the wood are better. Further a layer is formed on the surface of the wood from the dried emulsion, which layer among others improves the painting properties. The wood is in a way already primed. Due to the improved properties the wood also remains usable in the application longer.

The wood to be treated can be for example pine, especially sapwood of pine, birch, spruce or some other wood that can be impregnated. The material can be solid wood (incl. laminated timber), veneer or plywood. The impregnability of the wood can, if desired, be improved with a suitable pre-treatment, for example with mechanical "injecting", steaming or microwave treatment. Applications for the treated material are especially weather susceptible targets, such as outer walls, terraces, fences and various other garden structures.

Examples of the invention are further presented below.

### Example 1. Manufacture of an air-drying reaction product

480 g tall oil fatty acid (rosin content less than 3 wt-%, acid value about 200, iodine value min. 150) was weighed into a glass melting flask provided with a mixer. In addition, 130 g of gum rosin and 120 g of pentaerythritol was weighed. The mixture was heated on an electric sudatory to 80 °C and the mixing was switched on. Nitrogen gas was used in the reaction to inert the inside of the flask. The temperature rise was continued to 180-190 °C, whereby the water distillation started. Thereafter the temperature was raised by 10 °C/h, until a temperature of 270 °C was reached. The cooking was continued at this temperature, until the acid value was less than 10.

### Example 2. Emulsion I

100 g of the air-drying reaction product according to example 1 was weighed in a vessel. 43 g of water, 7 g of Brij® 35 P emulgator and 0.3 g ammonium aqueous solution (28 %) for adjusting the pH were weighed in another vessel. This emulgator is non-ionic and contains lauryl polyethylene glycol ether. It was mixed until everything had dissolved. A 250 ml mixing vessel was put in a dissolver, which had a dispersing blade, the diameter of which was 40 mm. The mixing was started at a speed of 300-500 rpm and both of the mixtures were added at the same time as an even stream. The adding took about 5-10 minutes, whereafter the revolutions were increased to 1300-1800 rpm and continued for 10-20 minutes. The revolutions were lowered to about 300 rpm and 30 g of water was added. Thus a light coloured emulsion was obtained, the dry matter content of which with regard to the reaction product was 50 wt-%. The pH was 5-6 and the viscosity 30-60 mPas. The median d50 of the particle size distribution was determined with a Malvern Mastesizer 2000 device and it was 0.9 µm.

### Example 3. Emulsion II

Mixture A was made by mixing 75 g of water, 25 g of Serdox NOL 59 (etoxylated alcohol type) and 20 g of Brij® 35P, until the solution was clear. Mixture B was manufactured by mixing together 600 g of the air-drying reaction product according to example 1 and 3 g of ammonium aqueous solution (28 %), and was mixed until the solution was clear. The mixtures A and B (in a ratio of 1:5) were fed into the first mixing chamber of a continuously functioning emulgator, where the mixing speed was 2500-3000 rpm. The formed emulsion was led to the subsequent mixing chamber (mixing speed 500-1000 rpm), where the emulsion and diluting water were fed in a ratio of 1.5:1, whereby a diluted emulsion was obtained, the dry matter content of which was about 55 wt-%, the pH 6-7 and the viscosity 150-250 mPas. The median d(0.5) of the particle size distribution was 350 nm.

### Example 4. Impregnation test

Test pieces were sawed from pine sapwood, the dimensions of which pieces were 25x50x500 mm (height, width, length). The pieces were weighed and their humidity was measured before the impregnation. The test pieces were placed in a 2 meter long impregnation basin, the capacity of which was about 300 litres. The load was tied in place with cloths to prevent floating. The impregnation was performed with the emulsion according to example 2, which was diluted with water to a dry matter content of 46 wt-%, which impregnation included the following stages: underpressure - absorption of the impregnation solution - overpressure - removal of impregnation solution - underpressure. Duration and pressures of the stages: initial underpressure about 15 minutes, 93-100 mbar; overpressure, about 90 minutes, 12 bar; finishing underpressure about 15 minutes, 93-100 mbar. At the end of the treatment excess liquid was removed from the surface of the test pieces and they were placed on battens in a hall to dry. Two parallel impregnation tests were made.

### Example 5. Moisture deformation and water absorption

Test pieces were sawed from timber impregnated according to example 4, the dimensions of which pieces were 25x50x50 mm, so that the moisture movement could be measured both in the radial, the tangential and the longitudinal direction. The pieces were submerged in water in stands with the depth direction in the vertical direction. Change in the dimensions (radius, tangent, length) and the weight were monitored as a function of time. The moisture deformation and water absorption were compared to untreated test pieces. The results are shown in tables 1-4.

**Table 1. Absorption %**

| Time | Composition according to example 2 | Non-impregnated |
|---|---|---|
| 0 min | 0 | 0 |
| 2 min | 2.14 | 9.58 |
| 6 min | 3.00 | 10.58 |
| 18 min | 3.70 | 12.67 |
| 40 min | 5.00 | 14.59 |
| 2 h | 6.42 | 17.93 |
| 6 h | 9.03 | 23.48 |
| 24 h | 15.89 | 32.47 |
| 30 h | 16.84 | 34.32 |
| 3 days | 19.45 | 39.50 |
| 7 days | 22.12 | 48.43 |

**Table 2. Swelling in the radial direction (%) (thickness)**

| Time | Composition according to example 2 | Non-impregnated |
|---|---|---|
| 0 min | 0 | 0.00 |
| 2 min | -0.02 | |
| 6 min | 0.10 | |
| 18 min | 0.15 | 0.51 |
| 40 min | 0.32 | 0.78 |
| 2 h | 0.61 | 1.37 |
| 6 h | 1.07 | 2.36 |
| 24 h | 1.82 | 3.73 |
| 30 h | 1.87 | 3.94 |
| 3 days | 1.95 | 4.27 |
| 7 days | 2.07 | 6.13 |

**Table 3. Swelling in the grain direction (%) (length)**

| Time | Composition according to example 2 | Non-impregnated |
|---|---|---|
| 0 min | 0 | 0 |
| 2 min | 0.04 | |
| 6 min | 0.13 | |
| 18 min | 0.12 | 0.44 |
| 40 min | 0.07 | 0.56 |
| 2 h | 0.11 | 0.65 |
| 6 h | 0.19 | 0.65 |
| 24 h | 0.24 | 0.65 |
| 30 h | 0.26 | 0.61 |
| 3 days | 0.29 | 0.61 |
| 7 days | 0.31 | 0.61 |

**Table 4. Swelling in the tangential direction (%) (width)**

| Time | Composition according to example 2 | Non-impregnated |
|---|---|---|
| 0 min | 0 | 0 |
| 2 min | 0.11 | |
| 6 min | 0.42 | |
| 18 min | 0.54 | 0.49 |
| 40 min | 0.89 | 1.30 |
| 2 h | 1.51 | 1.99 |
| 6 h | 2.24 | 3.31 |
| 24 h | 3.21 | 5.07 |
| 30 h | 3.24 | 5.13 |
| 3 days | 3.32 | 5.81 |
| 7 days | 3.40 | 5.96 |

### Example 6. Impregnation test

Test pieces were sawed from pine sapwood, the dimensions of which pieces were 25x50x450 mm (height, width, length). The pieces were brought to a standard weight in room air and their ends were lacquered several times with urethane lacquer. Before the impregnations the humidity percent, the density and the dry density of ten randomly selected wood pieces were determined by means of two parallel determinations. The test pieces were placed in an about 0.5 meter long impregnation basin, the capacity of which was about 8 litres. The impregnation was performed with the emulsion according to example 3, which was diluted with water to a dry matter content of 5.5, 8.25 and 16.5 %, which impregnation included the following stages: underpressure - absorption of the impregnation solution - overpressure - removal of impregnation solution. The duration and pressures of the stages: initial underpressure about 30 minutes, 0.15 bar; overpressure, 4h, 12 bar. At the end of the treatment the test pieces were rinsed with a small amount of deionized water and weighed. They were placed on battens to dry in room temperature for two days, whereafter the pieces were transferred to a heating chamber at 50 °C for two days and at the end the temperature was further raised to 103 °C for two days. At the end the pieces were weighed.

### Example 7. Moisture deformation and water absorption

Test pieces were sawed from timber impregnated according to example 6, the dimensions of which pieces were 25x50x50 mm, so that the moisture deformation could be measured both in the radial, the tangential and the longitudinal direction. The pieces were submerged in water in stands with the depth direction in the vertical direction. Change in the tangent and weight were monitored as a function of time. The moisture deformation and water absorption were compared to untreated test pieces. The results are shown in tables 5-6.

**Table 5. Absorption %**

| Time | Composition according to example 3, 5.5 % average | Composition according to example 3, 8.25 % average | Composition according to example 3, 16.5 % average | Non-impregnated |
|---|---|---|---|---|
| 0 min | 0 | 0 | 0 | 0 |
| 1 h | 35.9 | 14.2 | 9.35 | 49.2 |
| 24 h | 52.3 | 32.2 | 31.9 | 59.1 |
| 2 days | 55.8 | 36.7 | 35.5 | 61.3 |
| 7 days | 80.3 | 57.5 | 53.3 | 89.3 |

**Table 6. Swelling in the tangential direction (%) (width)**

| Time | Composition according to example 3, 5.5 % average | Composition according to example 3, 8.25 % average | Composition according to example 3, 16.5 % average | Non-impregnated |
|---|---|---|---|---|
| 0 min | 0 | 0 | 0 | 0 |
| 30 min | 2.0 | | | 5.1 |
| 1 h | 3.8 | 1.3 | 1.2 | 5.3 |
| 24 h | 4.5 | 3.1 | 2.7 | 5.5 |
| 2 days | 4.5 | 3.2 | 3.5 | 5.6 |
| 7 days | 4.5 | 3.2 | 4.5 | 5.6 |

### Example 8. Blue discolouration test

A blue discolouration test was done on wood pieces impregnated with the emulsion according to example 2. The blue discolouration test was done according to the European standard EN 152, part 1. No biocide was added. Non-impregnated comparable wood was used as comparison material.

The impregnated and non-impregnated test pieces were sawed into pieces sized 10x25x95 mm, the ends of which were closed with a 2-component epoxy paint and the pieces were exposed in a weather testing cabinet to QUV conditions for two weeks in a cycle described in standard EN 927-6. Six parallel test members were tested.

After the weather testing cabinet treatment the humidity of the pieces was standardized in a standard atmosphere space. (20 °C, relative humidity 65 %). A spore suspension of blueing fungi *Aureobasidium pullulans* DSM 3497 and *Sydowia polyspora* DSM 3498 was manufactured according to standard EN 152.

Before the exposure to the fungi the closed ends of the pieces were cut off, whereby the final length was 90 mm. Sterilized water-vermiculite mixture was put in maintenance vessels. The pieces were dipped in the spore suspension and placed in the vessels on the water-vermiculite mixture in a horizontal position. The vessels were closed and incubated for 6 weeks. Possible fungi growth was then estimated visually using the following scale:
0 no blue discolouration
1 no significant blue discolouration; only individual small spots
2 blue discolouration; at most 1/3 continuously discoloured or at most 1/2 partly discoloured
3 intense blue discolouration; more than 1/3 continuously discoloured or more than 1/2 partly discoloured.

Also the inner parts of the pieces were evaluated. The samples were cut at a distance of 30 mm from the ends. The depth of the non-discoloured zone was measured. The growth inhibition zone was evaluated at a distance of 10 mm from the edges and from the middle of the sample (6 points/sample).

The results are shown in table 7.

**Table 7. Blue discolouration test**

| Impregnation test | Impregnating substance | Growth | Average | Min, max |
|---|---|---|---|---|
| 4 | The composition of example 2 | 2,3,3,3,3,3 | 2.8 | min 2 / max 3 |
| 4 | The composition of example 2 | 2,3,3,3,3,3 | 2.8 | min 2 / max 3 |
| | Non-impregnated | Discoloured throughout | | |
| | Non-impregnated | Discoloured throughout | | |

### Example 4. Surface mould test

A surface mould test was done on wood pieces impregnated with the emulsion according to example 2. The test was done according to European standard EN 152, part 1, and the moulds were selected according to standard EN 15457. No biocide was added. Non-impregnated comparable wood was used as comparison material.

The impregnated and non-impregnated test pieces were sawed into pieces sized 10x25x95 mm, the ends of which were closed with a 2-component epoxy paint and the pieces were exposed in a weather testing cabinet to QUV conditions for two weeks in a cycle described in standard EN 927-6. Six parallel test members were tested.

After the weather testing cabinet treatment the humidity of the pieces was standardized in a standard atmosphere space. (20 °C, relative humidity 65 %). A spore suspension of the moulds *Alternaria alternata* DSM 62010, *Aspergillus versicolor* DSM 1943, *Cladosporium cladosporoides* DSM 2121, *Phoma violacae* IMI 049948ii, *Penicillium purpurogenum* DSM 62866 and *Stachybotrys chartarum* DSM 2144 was manufactured according to standard EN 15457.

Before the exposure to the moulds the closed ends of the pieces were cut off, whereby the final length was 90 mm. Sterilized water-vermiculite mixture was put in maintenance vessels. The pieces were dipped in the spore suspension and placed in the vessels on the water-vermiculite mixture in a horizontal position. The vessels were closed and incubated for 12 weeks. Possible mould growth was then estimated visually using the following scale:

| | |
|---|---|
| 0 | no mycocelial filaments on the surface of the test piece |
| 1 | < 10 % of the surface of the test piece covered in mycocelial filaments |
| 2 | 10 % - 30 % of the surface of the test piece covered in mycocelial filaments |
| 3 | 30 % - 50 % of the surface of the test piece covered in mycocelial filaments |
| 4 | 50 % - 100 % of the surface of the test piece covered in mycocelial filaments |

The surfaces of the non-impregnated test pieces were completely covered with mycocelial filaments. The test pieces were also examined with a microscope, since growth was difficult to detect on the surfaces of the impregnated test pieces. The results are shown in table 8.

**Table 8. Surface mould test**

| Impregnation test | Impregnating substance | Growth (visual estimation) | Growth (estimated with microscope) |
|---|---|---|---|
| 4 | The composition of example 2 | 1,3,4,1,1,0 | 2,3,1,1,1,1 |
| 4 | The composition of example 2 | 1,1,1,1,2,2 | 1,1,1,1,2,2 |
| | Non-impregnated | Completely covered with mycocelial filaments | |
| | Non-impregnated | Completely covered with mycocelial filaments | |

## Claims

1. A method, in which an emulsion is absorbed into wood by means of pressure difference, **characterized in that** the emulsion consists of 5-50 wt.% of a reaction product of a fatty acid obtained from a natural oil with a polyalcohol, and optionally a natural rosin,
- one or more emulgators selected from non-ionic emulgators and anionic emulgators, wherein the concentration of emulgators in the emulsion is 1-12 wt-%, and
- water, and
- optionally one or several pH regulators,
- optionally one or several preservatives for emulsion selected from 1,2-benzisothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate,
- optionally one or several physically acting wood preservatives selected from polyvalent metal salts,
- optionally one or several siccatives selected from cobalt and zirconium salts
- optionally one or several colouring agent(s).

2. The method according to claim 1, wherein the reaction product is a reaction product of a fatty acid obtained from a natural oil, a natural rosin with a polyalcohol.

3. The method according to claim 1 or 2, wherein an emulsion concentrate is manufactured first, and it is then diluted with water to form the emulsion, which is absorbed into the wood.

4. The method according to claim 3, wherein the emulsion concentrate contains 40-80 wt-% of reaction product.

5. The method according to any of the claims 1-4, wherein the median d50 of the particle size distribution measured with a Malvern Mastersizer 2000 laser diffractometer of the reaction product in the emulsion is less than 5 µm.

6. The method according to claim 5, wherein the median d50 of the particle size distribution of the reaction product in the emulsion is less than 950 nm.

7. The method according to any of the claims 1-6, wherein the emulsion is absorbed into the wood with a pressure impregnation method, a vacuum impregnation method or a combination of these.

8. Use of an emulsion, which consists of
- 5-50 wt.% of a reaction product of a fatty acid obtained from a natural oil with a polyalcohol, and optionally a natural rosin,
- one or more emulgators selected from non-ionic emulgators and anionic emulgators, wherein concentration of emulgators in the emulsion is 1-12 wt-%, and
- water,
- optionally one or several pH regulators,
- optionally one or several preservatives for emulsion selected from 1, 2-benzisothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate
- optionally one or several physically acting wood preservatives selected from polyvalent metal salts,
- optionally one or several siccatives selected from cobalt and zirconium salts
- optionally one or several colouring agents for impregnating wood by means of pressure difference.

9. Use of an emulsion, which consists of
- 5-50 wt.% of a reaction product of a fatty acid obtained from a natural oil with a polyalcohol, and optionally a natural rosin,
- one or more emulgators selected from non-ionic emulgators and anionic emulgators, wherein concentration of emulgators in the emulsion is 1-12 wt-%, and
- water,
- optionally one or several pH regulators,
- optionally one or several preservatives for emulsion selected from1,2-benzisothiazol-3(2H)-one, N-butyl benzisothiazolone, 2-octyl-2H-isothiazol-3-one, 2,2-ditiobis(N-methyl)benzamide, methyl isothiazolinone, zinc pyritione and iodine propynyl butyl carbamate
- optionally one or several physically acting wood preservatives selected from polyvalent metal salts,
- optionally one or several siccatives selected from cobalt and zirconium salts,
- optionally one or several colouring agents
for increasing the dimensional stability of wood, wherein the emulsion is adsorbed into wood by means of pressure difference.

## Patentansprüche

1. Verfahren, bei dem eine Emulsion mittels Druckdifferenz in Holz absorbiert wird, **dadurch gekennzeichnet, dass** die Emulsion aus Folgendem besteht: 5-50 Gew.-% eines Reaktionsprodukts einer Fettsäure, die aus einem natürlichen Öl erhalten wird, mit einem Polyalkohol, und wahlweise einem natürlichen Kolophonium,
- einem oder mehreren Emulgatoren, ausgewählt aus nichtionischen Emulgatoren und anionischen Emulgatoren, wobei die Konzentration der Emulgatoren in der Emulsion 1 bis 12 Gew.-% beträgt;
und
- Wasser und
- wahlweise einem oder mehreren pH-Reglern,
- wahlweise einem oder mehreren Konservierungsstoffen für eine Emulsion, ausgewählt aus 1,2-Benzisothiazol-3(2H)on, N-Butylbenzisothiazolon, 2-Octyl-2H-isothiazol-3-on, 2,2-Ditiobis(N-methyl)benzamid, Methylisothiazolinon, Zinkpyrithion und lodpropinylbutylcarbamat,
- wahlweise einem oder mehreren physikalisch wirkenden Holzschutzmitteln, ausgewählt aus mehrwertigen Metallsalzen,
- wahlweise einem oder mehreren Sikkativa, ausgewählt aus Kobalt- und Zirkoniumsalzen,
- wahlweise einem oder mehreren Färbemitteln.

2. Verfahren nach Anspruch 1, wobei das Reaktionsprodukt ein Reaktionsprodukt einer Fettsäure, die aus einem natürlichen Öl erhalten wird, einem natürlichen Kolophonium mit einem Polyalkohol ist.

3. Verfahren nach Anspruch 1 oder 2, wobei zuerst ein Emulsionskonzentrat hergestellt wird, und dieses dann mit Wasser verdünnt wird, um die Emulsion zu bilden, die in das Holz absorbiert wird.

4. Verfahren nach Anspruch 3, wobei das Emulsionskonzentrat 40-80 Gew-% Reaktionsprodukt enthält.

5. Verfahren nach einem der Ansprüche 1-4, wobei der mittlere D50 der Partikelgrößenverteilung, gemessen mit einem Malvern Mastersizer 2000 Laser-Diffraktometer, des Reaktionsprodukts in der Emulsion weniger als 5 µm beträgt.

6. Verfahren nach Anspruch 5, wobei der mittlere D50 der Partikelgrößenverteilung des Reaktionsprodukts in der Emulsion weniger als 950 nm beträgt.

7. Verfahren nach einem der Ansprüche 1 bis 6, wobei die Emulsion mit einem Druckimprägnierungsverfahren, einem Vakuumimprägnierungsverfahren oder einer Kombination dieser in das Holz absorbiert wird.

8. Verwendung einer Emulsion, bestehend aus:
- 5-50 Gew.-% eines Reaktionsprodukts einer Fettsäure, die aus einem natürlichen Öl erhalten wird, mit einem Polyalkohol, und wahlweise einem natürlichen Kolophonium,
- einem oder mehreren Emulgatoren, ausgewählt aus nichtionischen Emulgatoren und anionischen Emulgatoren, wobei die Konzentration der Emulgatoren in der Emulsion 1 bis 12 Gew.-% beträgt; und
- Wasser und
- wahlweise einem oder mehreren pH-Reglern,
- wahlweise einem oder mehreren Konservierungsstoffen für eine Emulsion, ausgewählt aus 1,2-Benzisothiazol-3(2H)on, N-Butylbenzisothiazolon, 2-Octyl-2H-isothiazol-3-on, 2,2-Ditiobis(N-methyl)benzamid, Methylisothiazolinon, Zinkpyrithion und lodpropinylbutylcarbamat,
- wahlweise einem oder mehreren physikalisch wirkenden Holzschutzmitteln, ausgewählt aus mehrwertigen Metallsalzen,
- wahlweise einem oder mehreren Sikkativa, ausgewählt aus Kobalt- und Zirkoniumsalzen,
- wahlweise einem oder mehreren Färbemitteln,
zum Imprägnieren von Holz mittels Druckdifferenz.

9. Verwendung einer Emulsion, bestehend aus:
- 5-50 Gew.-% eines Reaktionsprodukts einer Fettsäure, die aus einem natürlichen Öl erhalten wird, mit einem Polyalkohol, und wahlweise einem natürlichen Kolophonium,
- einem oder mehreren Emulgatoren, ausgewählt aus nichtionischen Emulgatoren und anionischen Emulgatoren, wobei die Konzentration der Emulgatoren in der Emulsion 1 bis 12 Gew.-% beträgt,
und
- Wasser und
- wahlweise einem oder mehreren pH-Reglern,
- wahlweise einem oder mehreren Konservierungsstoffen für eine Emulsion, ausgewählt aus 1,2-Benzisothiazol-3(2H)on, N-Butylbenzisothiazolon, 2-Octyl-2H-isothiazol-3-on, 2,2-Ditiobis(N-methyl)benzamid, Methylisothiazolinon, Zinkpyrithion und lodpropinylbutylcarbamat,
- wahlweise einem oder mehreren physikalisch wirkenden Holzschutzmitteln, ausgewählt aus mehrwertigen Metallsalzen,
- wahlweise einem oder mehreren Sikkativa, ausgewählt aus Kobalt- und Zirkoniumsalzen,
- wahlweise einem oder mehreren Färbemitteln
zum Erhöhen der Formstabilität von Holz, wobei die Emulsion mittels Druckdifferenz in das Holz absorbiert wird.

## Revendications

1. Procédé, dans lequel une émulsion est absorbée sur du bois au moyen d'une différence de pression, **caractérisé en ce que** l'émulsion est constituée de 5 à 50% en poids d'un produit de réaction d'un acide gras obtenu à partir d'une huile naturelle avec un polyalcool, et éventuellement d'une colophane naturelle,
- d'un ou de plusieurs émulsifiants choisis parmi les émulsifiants non ioniques et les émulsifiants anioniques, dans lequel la concentration des émulsifiants dans l'émulsion est de 1 à 12 % en poids, et
- de l'eau, et
- éventuellement d'un ou de plusieurs régulateurs de pH,
- éventuellement d'un ou de plusieurs conservateurs pour émulsion choisis parmi le 1,2-benz-isothiazol-3-(2H)-one, le N-butyle benzisothiazolone, le 2-octyl-2H-isothiazol-3-one, le 2,2-dithiobis[N-méthylbenzamide], l'isothiazolinone de méthyle, la pyrithione de zinc et le carbamate d'iodure de propynyle butyle,
- éventuellement d'un ou de plusieurs produits de conservation du bois à action physique choisis parmi des sels métalliques polyvalents,
- éventuellement d'un ou de plusieurs siccatifs choisis parmi des sels de cobalt et de zirconium,
- éventuellement d'un ou de plusieurs colorants.

2. Procédé selon la revendication 1, dans lequel le produit de réaction est un produit de réaction d'un acide gras obtenu à partir d'une huile naturelle, d'une colophane naturelle avec un polyalcool.

3. Procédé selon la revendication 1 ou 2, dans lequel un concentré d'émulsion est d'abord préparé, puis il est dilué avec de l'eau pour former l'émulsion, qui est absorbée sur le bois.

4. Procédé selon la revendication 3, dans lequel le concentré d'émulsion contient 40 à 80 % en poids de produit de réaction.

5. Procédé selon l'une quelconque des revendications 1 à 4, dans lequel le d50 médian de la distribution granulométrique mesurée avec un diffractomètre laser Malvern Mastersizer 2000 du produit de réaction dans l'émulsion est inférieur à 5 µm.

6. Procédé selon la revendication 5, dans lequel le d50 médian de la distribution granulométrique du produit de réaction dans l'émulsion est inférieur à 950 nm.

7. Procédé selon l'une quelconque des revendications 1 à 6, dans lequel l'émulsion est absorbée sur le bois avec un procédé d'imprégnation sous pression, un procédé d'imprégnation sous vide ou une combinaison de ceux-ci.

8. Utilisation d'une émulsion, qui est composée
- de 5 à 50 % en poids d'un produit de réaction d'un acide gras obtenu à partir d'une huile naturelle avec un polyalcool, et éventuellement d'une colophane naturelle,
- d'un ou de plusieurs émulsifiants choisis parmi les émulsifiants non ioniques et les émulsifiants anioniques, dans lequel la concentration des émulsifiants dans l'émulsion est de 1 à 12 % en poids, et
- de l'eau,
- éventuellement d'un ou de plusieurs régulateurs de pH,
- éventuellement d'un ou de plusieurs conservateurs pour émulsion choisis parmi le 1,2-benz-isothiazol-3-(2H)-one, le N-butyle benzisothiazolone, le 2-octyl-2H-isothiazol-3-one, le 2,2-dithiobis]N-méthylbenzamide], l'isothiazolinone de méthyle, la pyrithione de zinc et le carbamate d'iodure de propynyle butyle,
- éventuellement d'un ou de plusieurs produits de conservation du bois à action physique choisis parmi des sels métalliques polyvalents,
- éventuellement d'un ou de plusieurs siccatifs choisis parmi des sels de cobalt et de zirconium,
- éventuellement d'un ou de plusieurs colorants pour l'imprégnation du bois par différence de pression.

9. Utilisation d'une émulsion, qui est composée
- de 5 à 50 % en poids d'un produit de réaction d'un acide gras obtenu à partir d'une huile naturelle avec un polyalcool, et éventuellement d'une colophane naturelle,
- d'un ou de plusieurs émulsifiants choisis parmi des émulsifiants non ioniques et des émulsifiants anioniques, dans lequel la concentration des émulsifiants dans l'émulsion est de 1 à 12 % en poids, et
- de l'eau,
- éventuellement d'un ou de plusieurs régulateurs de pH,
- éventuellement d'un ou de plusieurs conservateurs pour émulsion choisis parmi le 1,2-benz-isothiazol-3-(2H)-one, le N-butyle benzisothiazolone, le 2-octyl-2H-isothiazol-3-one, le 2,2-ditiobis[N-méthylbenzamide], l'isothiazolinone de méthyle, la pyrithione de zinc et le carbamate d'iodure de propynyle butyle,
- éventuellement d'un ou de plusieurs produits de conservation du bois à action physique choisis parmi des sels métalliques polyvalents,
- éventuellement d'un ou de plusieurs siccatifs choisis parmi des sels de cobalt et de zirconium,
- éventuellement d'un ou de plusieurs colorants permettant d'augmenter la stabilité dimensionnelle du bois, l'émulsion étant adsorbée sur le bois par différence de pression.
